# EUROPEAN PATENT APPLICATION

(11) **EP 4 760 928 A1**
(43) Date of publication of application: **17.06.2026**
(21) Application number: 25768502.4
(22) Date of filing: 11.02.2025
(51) Int. Cl.: H01M 50/258, H01M 50/204, H01M 50/55, H01M 50/249, H01M 50/30, H01M 50/593, H01M 50/271

(54) **BATTERY MODULE, AND BATTERY PACK AND VEHICLE INCLUDING SAME**

(30) Priority: 08.03.2024 KR 20240033432
(71) Applicant: LG Energy Solution, Ltd., Seoul 07335 (KR)
(72) Inventor: LEE, Jung-Hoon, Daejeon 34122 (KR); JUNG, Hye-Mi, Daejeon 34122 (KR)
(74) Representative: Plasseraud IP
(86) International application number: PCT/KR2025/001969
(87) International publication number: WO 2025/187978

(57) **Abstract**

The present disclosure relates to a battery module including: a cell assembly including a plurality of battery cells; and a module frame including a first frame and a second frame configured to be coupled to each other and store the cell assembly, wherein the first frame and the second frame may be configured to be rotationally symmetrical to each other.

## Description

### TECHNICAL FIELD

The present disclosure relates to a battery module, and a battery pack and a vehicle including the same.

This application is based on and claims priority from Korean Patent Application No. 10-2024-0033432, filed on March 08, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity.

A common method for configuring a battery pack by connecting multiple battery cells in series/parallel is performed by preferentially configuring a battery module including at least one battery cell and then by adding other components to at least one battery module to configure a battery pack or battery rack.

In the conventional battery module, the module frame is comprised of various parts such as a frame body with front and rear openings, a top plate, and end plates coupled to the front and rear openings of the frame body. As described above, in the case where the module frame is configured as multiple parts, multiple plates must be manufactured separately, and multiple welding processes must be performed to connect the multiple plates, which reduces productivity.

In addition, since welds are formed in multiple locations, if an event such as thermal runaway occurs in one battery cell, the pressure inside the module frame increases due to high-temperature venting gas or flame, which may cause the module frame to be damaged.

Furthermore, if the weld is broken, external oxygen may flow into the module frame, thereby increasing flames inside the battery module. In addition, this may lead to a fire or explosion of the battery module or battery pack. Such a fire or explosion of the battery module or battery pack may cause property damage as well as human casualties. For example, a fire or explosion occurring in a battery pack for an electric vehicle may threaten the safety of users, such as drivers.

### DISCLOSURE

### Technical Problem

The present disclosure is designed to solve the problems of the related art, and therefore the present disclosure is directed to providing a battery module capable of enhancing productivity by minimizing the parts of the module frame of the battery module, and capable of securing safety by stably maintaining the coupling state of the module frame, and a battery pack and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a cell assembly including a plurality of battery cells; and a module frame including a first frame and a second frame configured to be coupled to each other and store the cell assembly, wherein the first frame and the second frame may be configured to be rotationally symmetrical to each other.

The first frame and the second frame may be configured to be coupled to each other in a point-symmetrical form.

The plurality of battery cells may be configured to be stacked in a first direction, and the first frame and the second frame may be configured to be coupled to each other along a second direction horizontally orthogonal to the first direction.

The first frame and the second frame may be configured in a cuboid shape with one side open.

The first frame and the second frame may be configured such that their open-sided ends come into contact with each other and are coupled to each other.

A weld may be formed at open-sided ends where the first frame and the second frame are in contact with each other.

The first frame and the second frame may be configured to have a first hole and a second hole formed at a corner of an end thereof, respectively.

A plurality of first holes and a plurality of second holes may be provided respectively.

The battery module may further include a module frame configured to pass through the first hole and be electrically connected to an electrode lead of the battery cell.

The second hole may be configured to allow venting gas discharged from the battery cell to flow out.

The battery module may further include an insulating cover provided between the module frame and the cell assembly and configured to electrically insulate the module frame from an electrode lead of the battery cell.

The insulating cover may be configured to cover the second hole and to be opened at least partially by the venting gas.

The first frame and the second frame may be configured to be coupled in a vertically and horizontally symmetrical form.

In another aspect of the present disclosure, there is provided a battery pack including a battery module according to the present disclosure.

In another aspect of the present disclosure, there is provided a vehicle including a battery module according to the present disclosure.

### Advantageous Effects

According to one aspect of the present disclosure, it is possible to reduce the cost and time in manufacturing the battery module by minimizing the number of parts of the module frame. Accordingly, productivity can be improved and management convenience can be enhanced.

In addition, according to another aspect of the present disclosure, even if an impact or vibration occurs in the battery module, the module frame can be stably maintained without being damaged or broken. Therefore, the structural stability of the battery module can be secured.

Therefore, according to the above aspect of the present disclosure, even if a thermal event such as venting gas or flame occurs in the battery module, it is possible to minimize the release of the venting gas or flame to the outside through a damaged or broken portion of the module frame, thereby effectively preventing thermal runaway propagation between the battery modules.

Furthermore, according to the above aspect of the present disclosure, it is possible to effectively prevent fire from spreading due to oxygen or the like introduced through damaged or broken parts of the module frame in the battery module. Accordingly, the safety of the battery module can be secured.

In addition, according to another aspect of the present disclosure, the bonding state of the module frame can be stably maintained even when swelling of the battery cell occurs.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which may be a cross-section view taken along line I - I' in FIG. 1.
FIG. 4 is a drawing illustrating a weld of a battery module according to an embodiment of the present disclosure.
FIG. 5 is a top view of a battery module according to an embodiment of the present disclosure.
FIG. 6 is a top view of a battery module according to another embodiment of the present disclosure.
FIG. 7 is a drawing illustrating a separated module frame of a battery module according to another embodiment of the present disclosure.
FIG. 8 is a cross-sectional view illustrating a coupling portion of a module frame in a battery module according to another embodiment of the present disclosure.
FIG. 9 is a schematically perspective view of a module frame of a battery module according to an embodiment of the present disclosure.
FIG. 10 is a front view of a battery module according to an embodiment of the present disclosure.
FIG. 11 is an exploded perspective view of a battery module according to an embodiment of the present disclosure.
FIG. 12 is a rear view of a battery module according to an embodiment of the present disclosure.
FIG. 13 is a rear perspective view of a battery module according to an embodiment of the present disclosure.
FIG. 14 is a drawing illustrating the state where venting gas is discharged to the rear side when a thermal event occurs in a battery module according to an embodiment of the present disclosure.
FIG. 15 is a perspective view of a battery module according to another embodiment of the present disclosure.
FIG. 16 is a drawing illustrating a separated module frame of a battery module according to another embodiment of the present disclosure.
FIG. 17 is a cross-sectional view illustrating a coupling portion of a module frame in a battery module according to another embodiment of the present disclosure.
FIG. 18 is a schematically perspective view of a battery pack according to an embodiment of the present disclosure.
FIG. 19 is a schematically perspective view of a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, i.e., a first direction, the Y-axis direction may indicate a front-back direction, i.e., a second direction, perpendicular to the X-axis direction on the horizontal plane (X-Y plane), and the Z-axis direction may indicate an up-down direction (vertical direction) perpendicular to both the X-axis direction and the Y-axis direction, i.e., a height direction of the battery cell.

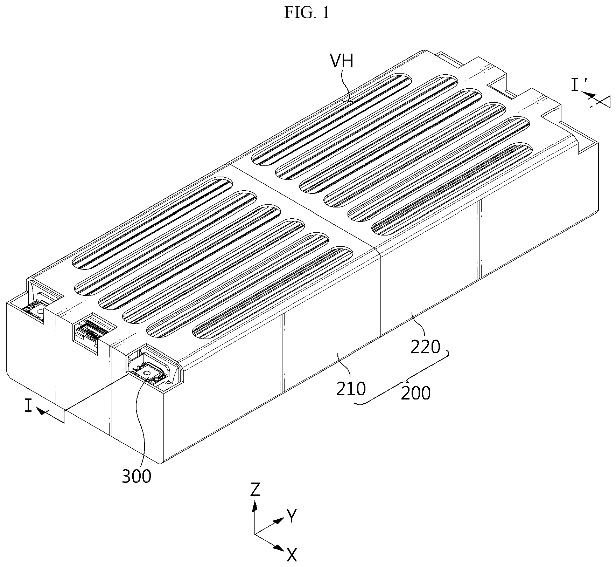

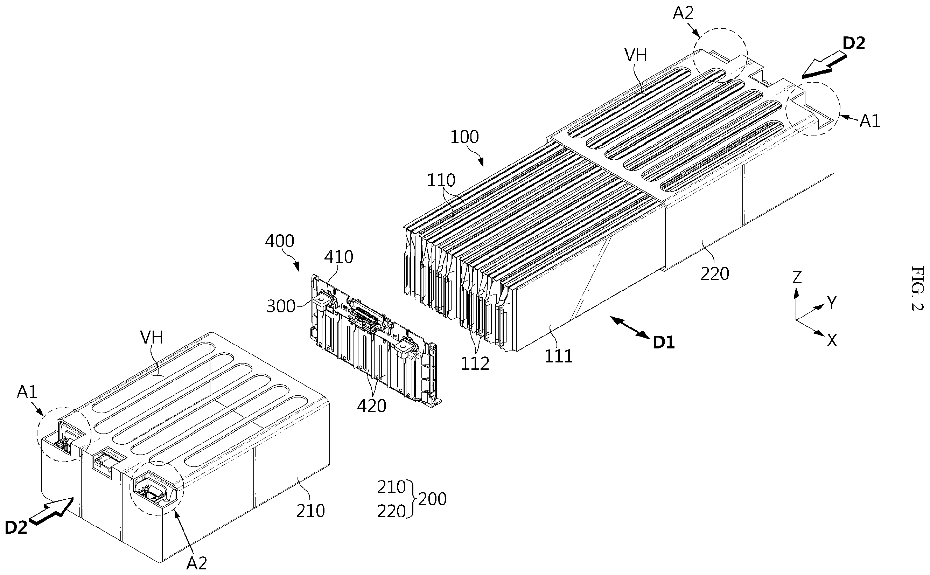

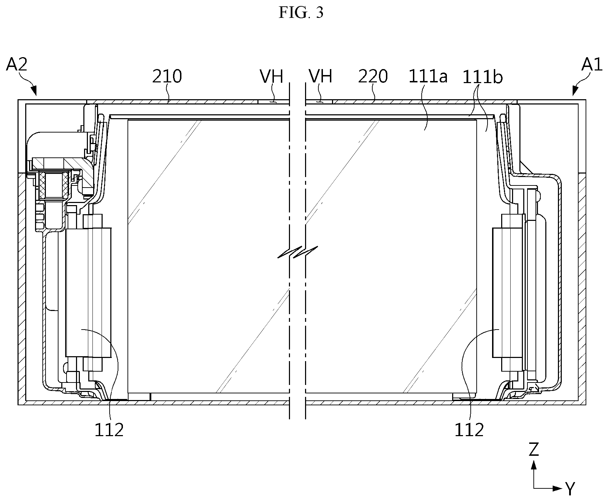

FIG. 1 is a perspective view of a battery module according to an embodiment of the present disclosure, and FIG. 2 is an exploded perspective view of a battery module according to an embodiment of the present disclosure. In addition, FIG. 3 is a cross-sectional view of a battery module according to an embodiment of the present disclosure, which may be a cross-section view taken along line I - I' in FIG. 1.

Referring to FIGS. 1 to 3, the battery module 10 according to the present disclosure includes a cell assembly 100 and a module frame 200.

The cell assembly 100 may include one or more battery cells 110, particularly, a plurality of battery cells 110. Here, each battery cell 110 may indicate one secondary battery, or may indicate a group of multiple secondary batteries. In this specification, the description will be made based on the battery cell 110 representing one secondary battery.

The plurality of battery cells 110 may include an electrode assembly, a cell case 111 that stores the electrode assembly, and an electrode lead 112 that is connected to the electrode assembly and extends outside the cell case 111 to function as an electrode terminal.

In this case, the cell case 111 may be configured in various shapes, and the battery cells 110 may be classified into a pouch-type cell, a cylindrical cell, and a prismatic cell depending on the shape of the cell case 111. Since the types of battery cells 110 were widely known at the time of filing the present disclosure, a detailed description thereof will be omitted. Although the drawings of this specification show a pouch-type battery cell, the present disclosure is applicable to all types of secondary batteries known at the time of filing the present disclosure, and is not limited to a specific type of secondary battery.

In the cell assembly 100, the plurality of battery cells 110 may be configured to be stacked in the first direction. For example, the plurality of battery cells 110 may be stacked side by side in the left-right direction (±X-axis direction), as indicated by arrow D1 in FIG. 2. In addition, the plurality of battery cells 110 provided in the cell assembly 100 may be electrically connected to each other in series and/or in parallel through a bus-bar 420, which will be described later.

The module frame 200 may be configured to store the cell assembly 100. Specifically, the module frame 200 may be configured to have a storage space formed therein and may store the cell assembly 100 in the storage space. For example, the module frame 200 may be configured in a cuboid shape formed by coupling several parts. The module frame 200 may be at least partially configured as metal and/or plastic materials.

More specifically, referring to FIGS. 1 to 3, the module frame 200 may include a first frame 210 and a second frame 220. In this case, the first frame 210 and the second frame 220 may be configured to have the same configuration but with different arrangement directions. That is, the first frame 210 and the second frame 220 may have the same structure. Specifically, several first frames 210 may be manufactured when manufacturing the module frame 200, and then two first frames 210 may be coupled to form the exterior of the module frame 200. The first frame 210 and the second frame 220 may be assembled to each other so as to store the cell assembly 100 therein.

In particular, the first frame 210 and the second frame 220 may be configured to be rotationally symmetrical with each other, and may be coupled to each other. That is, when the first frame 210 and the second frame 220 are coupled, the first frame 210 and the second frame 220 may be configured to be symmetrical in the horizontal direction and/or the vertical direction. The second frame 220 may be configured in a form obtained by rotating the first frame 210 in the horizontal direction and/or the vertical direction.

According to the above-implemented configuration of the present disclosure, the number of parts of the module frame 200 may be minimized, so that the exterior of the module frame 200 may be formed only by one component having a single structure. Accordingly, the manufacturing cost and time may be reduced when manufacturing the battery module 10. Therefore, productivity may be improved and management convenience may be enhanced.

In addition, according to the above-implemented configuration of the present disclosure, the module frame 200 may be formed with only two parts, i.e., the first frame 210 and the second frame 220, so as to store the entire cell assembly 100. Accordingly, according to the above-implemented configuration of the present disclosure, since the coupling area of various parts of the module frame 200 may be minimized, even if an impact or vibration is applied to the battery module 10, the module frame 200 may be prevented from being damaged or broken. Therefore, the structural stability of the battery module 10 may be secured.

In particular, according to the above-implemented configuration of the present disclosure, even if a thermal event such as venting gas or flame occurs in the battery module 10, the coupling state of the module frame 200 may be stably maintained. Accordingly, it is possible to prevent the module frame 200 from being separated and the venting gas or flame from being released to the outside. In addition, according to the above-implemented configuration of the present disclosure, it is possible to effectively prevent fire from spreading by oxygen flowing into the module frame 200 through a damaged or broken portion of the module frame 200. Therefore, the safety of the battery module may be secured.

According to an embodiment of the present disclosure, the first frame 210 and the second frame 220 may be configured to be coupled to each other in a point-symmetrical form. That is, when the battery module 10 is viewed from above while the first frame 210 and the second frame 220 are coupled, the first frame 210 and the second frame 220 may be configured to be point-symmetrical with respect to the center of the portion where the first frame 210 and the second frame 220 are coupled.

As another example, the second frame 220 may be configured in a form obtained by rotating the first frame 210 by 180 degrees in the horizontal direction. Alternatively, the second frame 220 may be configured in a form obtained by reversing the first frame 210 in the front-back direction.

More specifically, referring to FIGS. 2 and 3, when the first frame 210 and the second frame 220 are coupled, the portion A1 of the first frame 210 and the portion A1 of the second frame 220 may be provided at positions diagonally facing each other along the horizontal direction, and the portion A2 of the first frame 210 and the portion A2 of the second frame 220 may be provided at positions diagonally facing each other along the horizontal direction. That is, the portion A1 located at the upper right corner of the first frame 210 may be located at the upper left corner of the second frame 220, and the portion A2 located at the upper left corner of the first frame 210 may be located at the upper right corner of the second frame 220.

Accordingly, two components having the same structure may be coupled to each other by rotating only one of the two components in the horizontal direction. According to the above-implemented configuration of the present disclosure, the cost or time may be effectively reduced in manufacturing the battery module 10, so productivity may be further improved.

The first frame 210 and the second frame 220 may be configured to be coupled to each other along a second direction that is horizontally orthogonal to the first direction. For example, the second frame 220 may be coupled by moving from the rear to the front of the first frame 210 in a point-symmetrical manner with respect to the first frame 210. That is, the first frame 210 and the second frame 220 may be coupled along the front-back direction (±Y-axis direction), as indicated by arrow D2 in FIG. 2.

According to the above-implemented configuration of the present disclosure, since the first frame 210 and the second frame 220 are coupled in a direction orthogonal to the direction in which the battery cell 110 swells, the coupling state of the module frame 200 may be stably maintained even when the battery cell 110 swells.

In addition, the battery module 10 according to an embodiment of the present disclosure may be configured so that the venting guide direction of the venting gas generated in the battery cell 110 is orthogonal to the second direction in which the first frame 210 and the second frame 220 are assembled. For example, the first frame 210 and the second frame 220 may be assembled by moving inward along the front-back direction, and the venting guide direction may be configured to the upper direction.

According to the above-implemented configuration of the present disclosure, the area in which the first frame 210 and the second frame 220 are coupled to the side in venting guide direction may be minimized. That is, since the direction in which the venting gas or flame is discharged and the direction in which the first frame 210 and the second frame 220 are assembled do not match, the separation of the first frame 210 and the second frame 220 due to the pressure of the venting gas or flame may be minimized. Therefore, according to the above-implemented configuration of the present disclosure, even if a thermal event such as venting gas or flame occurs in the battery module 10, the coupling state of the module frame 200 may be stably maintained, so that the structural stability of the battery module 10 may be secured.

The venting guide direction will be described in more detail with reference to the drawings. The module frame 200 may have a venting hole VH formed on at least one side. For example, the venting hole VH may be formed in the first frame 210, and may also be formed in the second frame 220 obtained by rotating the first frame 210 by 180 degrees in the horizontal direction. This venting hole VH may be configured to discharge the venting gas generated in the battery cell 110 to the outside of the module frame 200.

For example, the venting hole VH may be formed as an opening to communicate the inside and outside of the module frame 200 with each other. However, the venting hole VH may not be completely open, but may be configured to be closed in a normal state and opened depending on changes in pressure or temperature.

A plurality of venting holes VH may be provided. In addition, the venting hole VH may be configured to extend in one direction. For example, the venting hole VH may be formed to extend in a longitudinal direction (second direction) of the battery cell 110.

According to this implemented configuration of the present disclosure, it is possible to prevent the battery module 10 from exploding due to an increase in the pressure inside the battery module 10 by the venting hole VH. In addition, in this case, the discharge direction of venting gas may be guided.

The venting hole VH may be formed on the top side of the module frame 200. That is, the venting gas inside the battery module 10 may be guided upward. In addition, in this case, the coupling direction of the first frame 210 and the second frame 220 may be the front-back direction (second direction) that is orthogonal to the upward direction.

According to the above-implemented configuration of the present disclosure, when the first frame 210 and the second frame 220 are assembled in the front-back direction, the separation of the first frame 210 and the second frame 220 due to the pressure of the venting gas or flame may be minimized by guiding the venting gas upward. Therefore, according to the above-implemented configuration of the present disclosure, even if a thermal event such as venting gas or flame occurs in the battery module 10, the coupling state of the module frame 200 may be stably maintained, so that the structural stability of the battery module 10 may be secured.

Referring to FIG. 3, in the case where the battery cell 110 is configured as a pouch-type battery cell, the cell case 111 may have a receiving portion 111a and a sealing portion 111b. The receiving portion 111a may be configured to receive an electrode assembly, and the sealing portion 111b may be configured to seal the electrode assembly by heat-fusing the edges of the receiving portion 111a. For example, one cell case 111 may be folded in the middle to store an electrode assembly therebetween, and may include a receiving portion 111a that receives the electrode assembly and a sealing portion 111b obtained by sealing three edges of the receiving portion 111a.

A pair of electrode leads 112 may be provided, and the pair of electrode leads 112 may extend outward from both ends of the battery cell 110 in the longitudinal direction (second direction). In this case, the pair of electrode leads 112 may be a positive electrode lead and a negative electrode lead. The battery cell 110 may be configured such that two electrode leads 112 are located only at one end in the second direction, for example, at the end in the +Y-axis direction, as necessary.

In this case, the sealing portion 111b may include a portion from which the electrode lead 112 extends outward and a portion from which no electrode lead 112 extends outward. For example, as shown in the embodiment illustrated in FIG. 3, the portion of the sealing portion 111a from which the electrode lead 112 extends outward may be provided on both sides of the cell case 111 along the second direction (front-back direction), and the portion from which no electrode lead 112 extends outward may be provided on the top side. That is, the plurality of battery cells 110 may be stacked face to face so that the electrode leads 112 extend outward in the front-back direction, and so that the sealing portion 111a from which no electrode lead 112 extends outward faces upward.

In this case, the venting gas generated in the battery cell 110 may be vented to the outside through the sealing portion 111a from which no electrode lead 112 extends outward. Therefore, the venting gas may be guided to vent upward. According to the above-implemented configuration of the present disclosure, the venting gas or the like vented upward from the battery cell 110 may be discharged to the outside of the battery module 10 through the venting hole VH provided at the top.

According to the above-implemented configuration of the present disclosure, the venting from the battery cell 110 may be more effectively guided upward. Accordingly, in the case where the first frame 210 and the second frame 220 are assembled in the front-back direction, even if a thermal event such as venting gas or flame occurs in the battery module 10, the separation of the first frame 210 and the second frame 220 due to the pressure of the venting gas or flame may be minimized. Therefore, the structural stability of the battery module 10 may be further secured.

Referring to FIG. 2, the battery module 10 of the present disclosure may further include a bus-bar frame assembly 400. The bus-bar frame assembly 400 may be provided inside the module frame 200 and configured to cover at least one side of the plurality of battery cells 110. The bus-bar frame assembly 400 may be located on the side where the electrode leads 112 of the battery cells 110 extend outward. For example, the bus-bar frame assembly 400 may be coupled to the front and rear sides of the plurality of battery cells 110.

The bus-bar frame assembly 400 may include a bus-bar frame 410 and a plurality of bus-bars 420. The bus-bar frame 410 may be disposed to be substantially coupled to the front and rear sides of the plurality of battery cells 110. The bus-bar frame 410 may have slits through which the electrode leads of the battery cells 110 may pass in the front-back direction.

In addition, the bus-bar frame 410 may be formed of a material having electrical insulation, such as a plastic material, and configured such that the bus-bar 420 may be attached to the outer surface.

The plurality of bus-bars 420 may be formed of a metal material, such as copper, aluminum, nickel, or the like as a means for connecting the battery cells 110 in series and/or in parallel, and may be configured in a rod shape.

The electrode leads 112 of the battery cells 110 may pass through the slits of the bus-bar frame 410 and extend outside the bus-bar frame 410, and the extending portion may be attached to the surface of the bus-bar 420 by welding or the like.

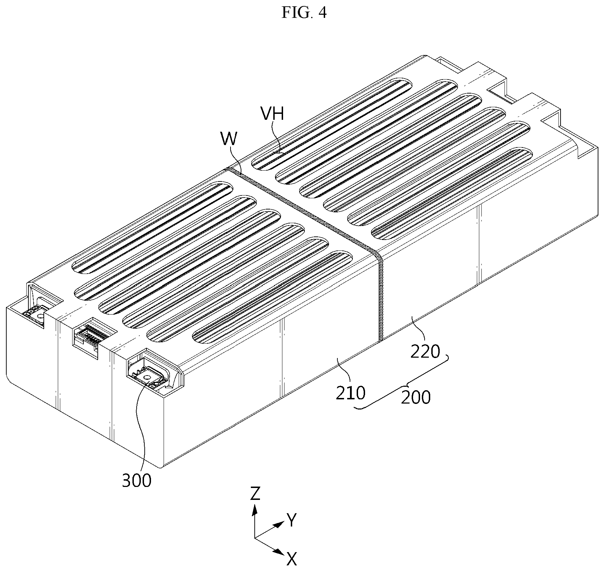

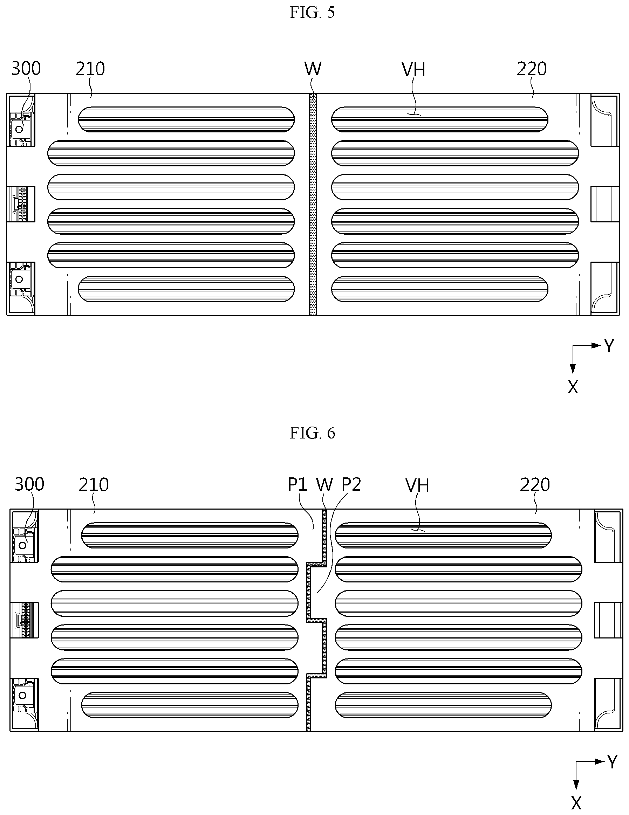

FIG. 4 is a drawing illustrating a weld of a battery module according to an embodiment of the present disclosure, and FIG. 5 is a top view of a battery module according to an embodiment of the present disclosure.

The first frame 210 and the second frame 220 may be configured in a cuboid shape with one side open. As a more specific example, the first frame 210 and the second frame 220 may be configured to have four edges at each open side. For example, in the embodiment in FIG. 2, the first frame 210 located at the front may be configured substantially in a rectangular shape when viewed from the rear. Likewise, the second frame 220 may be configured substantially in a rectangular shape when viewed from the front. Therefore, each of the first frame 210 and the second frame 220 may be configured to have four edges, i.e., upper, lower, left, and right edges, on the open side.

In this case, the first frame 210 and the second frame 220 may be configured such that their open sides face each other when the first frame 210 and the second frame 220 are coupled. That is, four edges of the first frame 210 and four edges of the second frame 220 may be configured to come into contact with each other. Accordingly, the module frame 200 may be configured in a cuboid shape.

When the first frame 210 and the second frame 220 are coupled, the first frame 210 may be configured to receive one part of the cell assembly 100 on one side, and the second frame 220 may be configured to be coupled to the first frame 210 and receive the remaining part of the cell assembly 100 on the other side. For example, as disclosed in the embodiment illustrated in FIG. 2, the first frame 210 may be configured to store a front part of the cell assembly 100, and the second frame 220 may be configured to store the remaining rear part of the cell assembly 100.

Specifically, after at least a part of the cell assembly 100 is stored in the first frame 210 or the second frame 220, the second frame 220 or the first frame 210 may be coupled so that the remaining part of the cell assembly 100 is stored inside the module frame 200. In this case, the first frame 210 and the second frame 220 may be coupled to each other by various fastening methods such as welding, bonding, bolting, and hooking.

In addition, the first frame 210 and the second frame 220 may be configured such that they store different parts of the cell assembly 100, respectively. For example, the top side, bottom side, and left and right sides of the cell assembly 100 may be configured to be separately covered by the first frame 210 and the second frame 220.

That is, the first frame 210 may be configured to surround portions of the top side, bottom side, and left and right sides of the cell assembly 100 and the front side of the cell assembly 100, and the second frame 220 may be configured to surround the remaining portions of the top side, bottom side, and left and right sides of the cell assembly 100 and the rear side of the cell assembly 100. Accordingly, the front side of the cell assembly 100 may be covered by the first frame 210, and the rear side of the cell assembly 100 may be covered by the second frame 220.

According to the above-implemented configuration of the present disclosure, the remaining areas, in particular, the front and rear sides of the cell assembly 100, excluding the area where the first frame 210 and the second frame 220 are coupled, may be completely covered by the first frame 210 and the second frame 220. Therefore, it is possible to minimize venting gas or flame from moving toward the adjacent battery modules 10 through the front and rear sides of the module frame 200 when a thermal event occurs in the battery module 10.

In particular, referring to FIGS. 4 and 5, a weld W may be formed at the open-sided ends where the first frame 210 and the second frame 220 are in contact with each other. For example, the weld W may be formed at the center of the module frame 200.

The first frame 210 and the second frame 220 may be configured such that the ends thereof are in contact with each other. In addition, the contact portions between the first frame 210 and the second frame 220 may be welded to form the weld W.

The weld W may be formed on at least one of the four edges of the first frame 210 and the second frame 220. In particular, the weld W may be formed at the portions where the four edges of the first frame 210 and the second frame 220 are in contact with each other. That is, the weld W may be formed at all of the upper, lower, left, and right portions where the inner open-sided ends of the first frame 210 and the second frame 220 come into contact with each other.

The weld W may be configured in the form of a line. For example, referring to the configuration of the battery module 10 according to the present disclosure as viewed from above in FIG. 4, the first frame 210 and the second frame 220 may be configured such that the upper portions thereof are welded to each other in the form of a line extending from one side to the other side. More specifically, the upper weld of the module frame 200 may be configured in the form of a line extending from the position where the left edge is provided to position where the right edge is provided.

According to the above-implemented configuration of the present disclosure, the first frame 210 and the second frame 220 may be more stably coupled. In addition, in this case, it is possible to more effectively preventing venting gas or flame from venting between the first frame 210 and the second frame 220.

FIG. 6 is a top view of a battery module according to another embodiment of the present disclosure.

The weld W may be configured in various shapes, in addition to the above-described embodiment. For example, the weld W may be configured in the form of a line that is at least partially bent. In particular, the weld W may be formed in a zigzag shape. That is, as disclosed in the embodiment in FIG. 6, on one side (top side) of the battery module 10, the weld W may be formed in a zigzag shape to protrude in the front-back direction with respect to the central portion (inner portion) of the battery module 10.

As a more specific example, referring to FIG. 6, the open-sided end of the first frame 210 may be configured in a protrusion-and-recess shape. At least one first protrusion P1 may be formed to protrude outward (rearward) from the open-sided end of the first frame 210. Similarly, since the second frame 220 is obtained by rotating the first frame 210 by 180 degrees in the horizontal direction, a second protrusion P2 may be provided at the front end of the second frame 220. In this case, the first protrusion P1 and the second protrusion P2 may be disposed to be staggered along the left-right direction (fir direction).

A plurality of first protrusions P1 may be provided on all of the four edges of the first frame 210.

According to the above-implemented configuration of the present disclosure, the length of the weld W may be formed long. That is, referring to the embodiment in FIG. 6, the length of the weld W may be formed longer than the width of the module frame 200 in the left-right direction. Therefore, the bonding strength of the weld W may be further improved, and the bonding strength between the first frame 210 and the second frame 220 may be increased.

In particular, in above-implemented configuration, since the weld W is distributed over a wide area along the coupling direction of the first frame 210 and the second frame 220, the tensile stress of the coupling portion between the first frame 210 and the second frame 220 may be improved.

Furthermore, according to the above-implemented configuration of the present disclosure, a fitting coupling between the first frame 210 and the second frame 220 may be implemented, so that the fixing force between them may be further improved. In addition, the sealing performance of the weld W may be further improved.

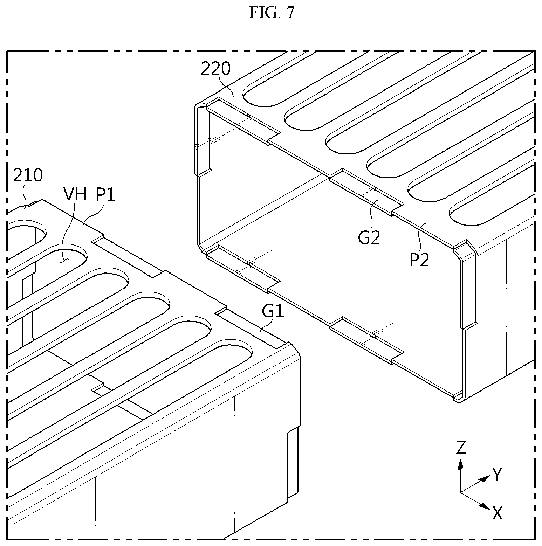

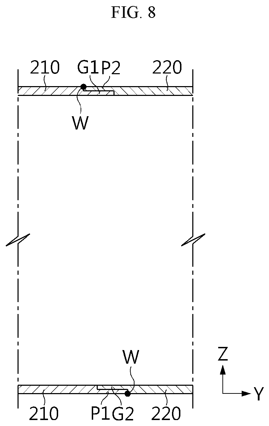

FIG. 7 is a drawing illustrating a separated module frame of a battery module according to another embodiment of the present disclosure, and FIG. 8 is a cross-sectional view illustrating a coupling portion of a module frame in a battery module according to another embodiment of the present disclosure.

The first frame 210 and the second frame 220 may be configured so that one component supports the other component in an outward direction. For example, the front end of the second frame 220 and the rear end of the first frame 210 may be configured to be inserted and coupled to each other.

Specifically, one of the first frame 210 and the second frame 220 may be configured to be seated on the other. That is, in the cross-section of the module frame 200 viewed from above, the inner open-sided end of the first frame 210 and the inner open-sided end of the second frame 220 may be configured to be staggered relative to each other in the vertical direction.

The rear end of the first frame 210 may have both a first protrusion P1 and a first recess G1 formed thereon. The first recess G1 may be provided between the first protrusions P1. The first recess G1 may be configured to be at least partially recessed inward from the rear end of the first frame 210. The first recess G1 may be configured to be recessed inward (downward) relative to the first protrusion P1.

A plurality of first recesses G1 may be configured to be spaced apart from each other. That is, the first recesses G1 and the first protrusions P1 may be provided alternately at the rear end of the first frame 210.

Likewise, since the second frame 220 is obtained by rotating the first frame 210 by 180 degrees in the horizontal direction, the front end of the second frame 220 may have a second protrusion P2 and a second recess G2 formed thereon. The second recess G2 may be configured to be at least partially recessed inward from the front end of the second frame 220. A plurality of second recesses G2 may be provided to be spaced apart from each other.

In this case, the first protrusions P1 and the second protrusions P2 may be disposed to be staggered relative to each other along the left-right direction (first direction). In addition, the second recesses G2 may be disposed to be staggered relative to the first recesses G1along the left-right direction (first direction).

The second recess G2 may be configured to allow the first protrusion P1 to be seated thereon. In addition, the first recess G1 may be configured to allow the second protrusion P2 to be seated thereon. The first and second recesses G1 and G2 may be provided at positions corresponding to the second and first protrusions P2 and P1, respectively. In addition, the first protrusion P1 and the second protrusion P2 may be configured to have lengths corresponding to the lengths of the first recess G1 and the second recess G2, respectively. Accordingly, the first frame 210 and the second frame 220 may be configured to be inserted and coupled to each other.

In above-implemented configuration, as disclosed in the embodiment illustrated in FIG. 6, the weld W may be configured in the form of a line that is bent along the protrusions and recesses of the first frame 210. In addition, the weld W may be formed at a portion where the first frame 210 and the second frame 220 support each other in the front-back direction. For example, as disclosed in the embodiment illustrated in FIG. 8, the weld W formed on the top side of the module frame 200 may be formed at the portion where the outermost portion of the second protrusion P2 of the second frame 220 is in contact with the first recess G of the first frame 210.

According to this configuration of the present disclosure, since one component of the module frame 200 supports the other component in the upward direction (outward direction), the contact state between the first frame 210 and the second frame 220 may be stably maintained during the welding process. Therefore, the welding property may be improved.

In addition, according to the above-implemented configuration of the present disclosure, since the recesses G1 and G2 are provided, it is possible to prevent the battery cells 110 stored inside the module frame 200 from being damaged during the welding process.

Furthermore, as disclosed in the embodiment illustrated in FIG. 7, the support configuration of the first frame 210 and the second frame 220 may be formed on the entire edges of the first frame 210 or the second frame 220, such as the upper, lower, left, and right sides. In this case, since the protrusions P1 and P2 are inserted into other components (the recesses G1 and G2), the insertion fastening between the first frame 210 and the second frame 220 may be implemented entirely on the module frame 200. Therefore, the mechanical bonding strength or assembly property between the first frame 210 and the second frame 220 may be further improved.

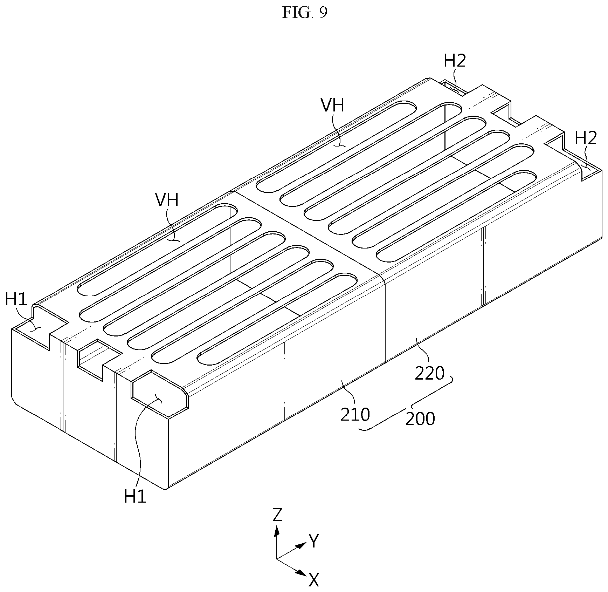

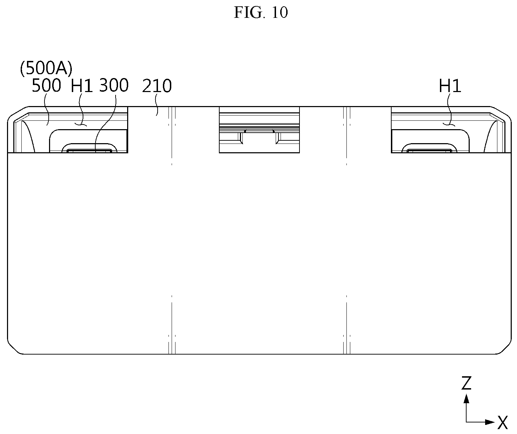

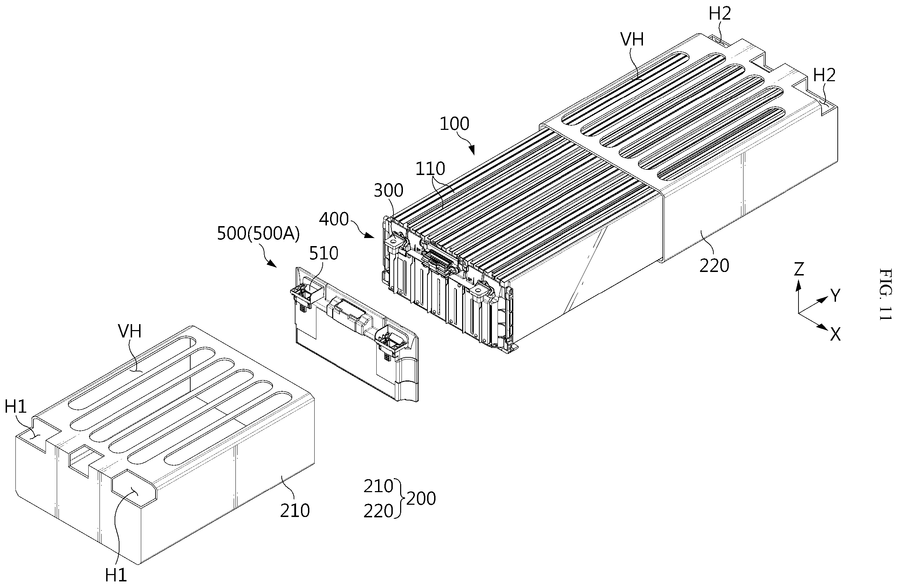

FIG. 9 is a schematically perspective view of a module frame of a battery module according to an embodiment of the present disclosure, FIG. 10 is a front view of a battery module according to an embodiment of the present disclosure, and FIG. 11 is an exploded perspective view of a battery module according to an embodiment of the present disclosure.

Referring to FIG. 9, a first hole H1 and a second hole H2 may be formed in the first frame 210 and the second frame 220, respectively. That is, a first hole H1 may be formed in the first frame 210, and a second hole H2 may be formed in the second frame 220 since it is configured with the same structure as the first frame 210. The first hole H1 and the second hole H2 may be formed at the closed-sided edges of the first frame 210 and the second frame 220, respectively. The first hole H1 and the second hole H2 may be formed at the corners of the ends of the first frame 210 and the second frame 220, respectively. For example, the first hole H1 may be formed at the corners of the front edge of the first frame 210. The first hole H1 may be formed by perforating at least a portion of the top side, the front side, the left side, and the right side of the closed-sided end of the first frame 210.

In addition, a plurality of first holes H1 and a plurality of second holes H2 may be provided. For example, three first holes H1 may be provided on the front edge of the first frame 210. The first holes H1 may be provided at the left and right corners of the front end of the first frame 210. In addition, a plurality of the first holes H1 may be disposed in a row along the left-right direction. The first hole H1 may be configured to expose a control device or an electrical or communication connection device of the battery module 10, such as a module terminal 300 or a connector, to the outside.

Referring to FIGS. 9 to 11, the battery module 10 according to an embodiment of the present disclosure may further include a module terminal 300. The module terminal 300 may be configured to be electrically connected to an electrode lead 112 of a battery cell 110. The module terminal 300 may be configured to be electrically connected to the electrode lead 112 of the battery cell 110. The module terminal 300 may include a positive electrode terminal and a negative electrode terminal. In addition, the module terminal 300 may be configured to be electrically or communicatively connected to a control device such as a BMS.

The module terminal 300 may be provided on the side where the electrode lead 112 of the battery cell 110 extends. For example, the module terminal 300 may be provided on the front side of the module frame 200. The module terminal 300 may be provided in the bus-bar frame 410. The module terminal 300 may be two bus-bars 420 provided at the outermost side, among a plurality of bus-bars 420.

The first frame 210 may be configured to at least partially cover the module terminal 300. According to the above-implemented configuration of the present disclosure, the first frame 210 is configured to protect the module terminal 300, thereby minimizing the high-temperature venting gas or flame from heading toward the module terminal 300 of the battery module 10 in the event of an abnormal situation in the adjacent battery module 10.

In addition, the module terminal 300 may be configured to at least partially pass through the first hole H1. Accordingly, the module terminal 300 may be configured to protrude outward from the first frame 210 through the first hole H1. Two module terminals 300 may be provided, and two first holes H1 may be provided on both sides of the first frame 210 to the left and right.

Referring to FIG. 11, the battery module 10 according to an embodiment of the present disclosure may further include an insulating cover 500. The insulating cover 500 may be configured to electrically insulate the module frame 200 from the bus-bar 420 or the electrode lead 112. For example, the module frame 210 may be made of a metal material such as aluminum, and the insulating cover 500 may be made of plastic.

The insulating cover 500 may be provided on the inner side of the module frame 200. That is, the insulating cover 500 may be provided between the module frame 200, and the cell assembly 100 and the bus-bar frame assembly 400. Specifically, the insulating cover 500 may be provide on the closed side of the module frame 200 and assembled to the cell assembly 100 and the bus-bar frame assembly 400.

As the insulating cover 500 is interposed between the module frame 200, the cell assembly 100 and the bus-bar frame assembly 400, as disclosed in the above-implemented configuration of the present disclosure, the end plate forming the front and rear sides of the module frame in the conventional battery module may have the insulating cover on the inner side, so that the assembling efficiency may be secured compared to the case where the insulating cover and the end plate are welded to the cell assembly.

In addition, according to the above-implemented configuration of the present disclosure, the possibility of the insulating cover 500 being separated when the internal pressure of the battery module 10 increases may be minimized, so that electrical insulation and structural stability may be secured.

Furthermore, according to the above-implemented configuration of the present disclosure, it is possible to suppress separation of the cell assembly 100 and the insulating cover 500 by venting gas or flame, thereby preventing venting gas or flame from being discharged toward the front of the battery module 10. Therefore, thermal runaway propagation between the battery modules 10 may be prevented.

The insulating cover 500 may include a first insulating cover 500A provided on the first frame 210 and a second insulating cover 500B provided on the second frame 220.

The first insulating cover 500A may be configured to electrically insulate the module frame 200 and the module terminal 300. The first insulating cover 500A may be configured to surround the outer periphery of the portion where the module terminal 300 is exposed to the outside.

In addition, referring to FIG. 11, the first insulating cover 500A may have a through-hole 510. The through-hole 510 may be configured such that the module terminal 300 passes therethrough. The through-hole 510 may be provided at a position corresponding to the first hole H1. Accordingly, the module terminal 300 may be configured to be at least partially exposed to the outside through the first hole H1 and the through-hole 510.

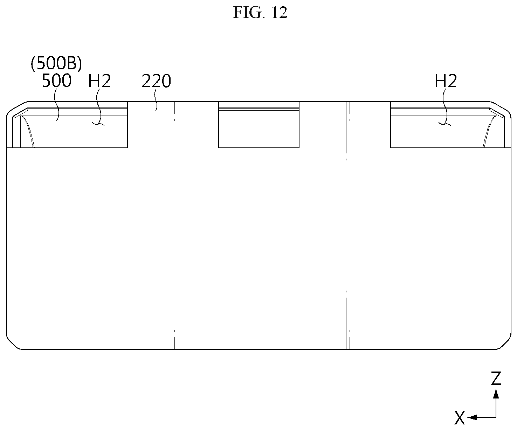

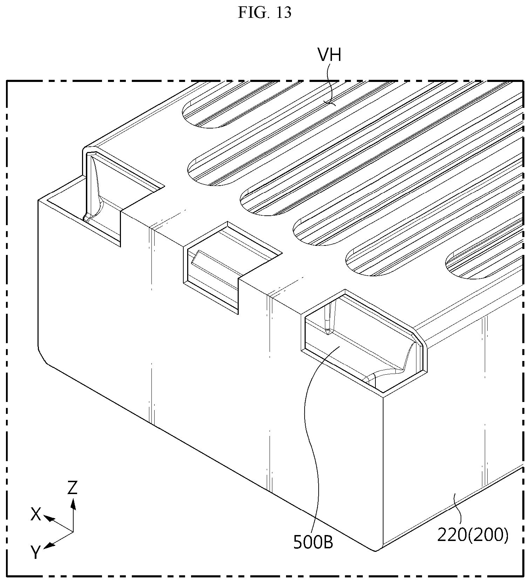

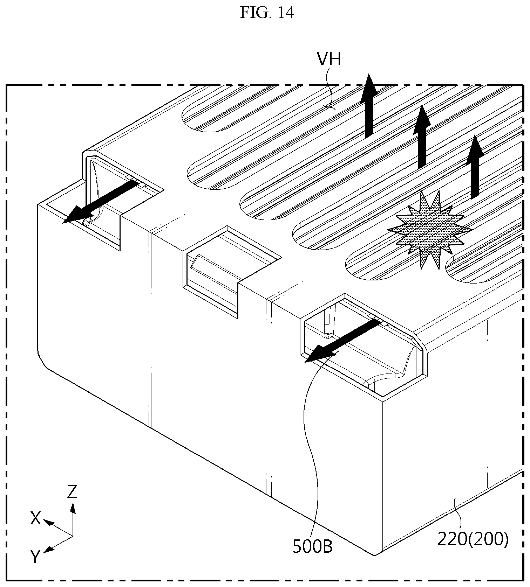

FIG. 12 is a rear view of a battery module according to an embodiment of the present disclosure, and FIG. 13 is a rear perspective view of a battery module according to an embodiment of the present disclosure. In addition, FIG. 14 is a drawing illustrating the state where venting gas is discharged to the rear side when a thermal event occurs in a battery module according to an embodiment of the present disclosure.

As described above, the battery module 10 according to an embodiment of the present disclosure may have a first hole H1 formed in the first frame 210 such that the module terminal 300 is at least partially exposed to the outside to be electrically or communicatively connected to a control device such as a BMS. Accordingly, as disclosed in the embodiment illustrated in FIGS. 12 and 13, a second hole H2 may inevitably be provided in the second frame 220 having the same structure as the first frame 210.

The second hole H2 may be configured to allow the module terminal 300 to pass through it, like the first hole H1. Alternatively, as disclosed in the embodiment illustrated in the drawing, when the module terminal 300 is not provided on the rear side of the battery module 10, the second hole H2 may be configured to allow venting gas discharged from the battery cell 110 to flow out. That is, the second hole H2, along with the venting hole VH, may be configured to discharge heat to the outside when a thermal event occurs in the inner space of the battery module 10.

According to this implemented configuration of the present disclosure, the venting gas released from the battery module 10 may be discharged in a distributed manner upward and rearward. Accordingly, it is possible to prevent a concentrated increase in the temperature of a specific part outside the battery module 10. Therefore, it is possible to prevent the battery module 10 from exploding due to an increase in the pressure inside the battery module 10. In addition, in this case, the discharge location of the venting gas may be limited.

In addition, since the second hole H2 is located at the rearmost position in the battery module, the venting gas inside the battery module 10 may be quickly and smoothly discharged to the outside. In particular, the cell assembly 100 inside the battery module 10 may be stacked in the left-right direction while standing in the up-down direction, as shown in FIG. 2. In this case, the venting gas discharged from one or more battery cells 110 included in the cell assembly 100 is likely to gather in the front or rear of the battery module 10 where the electrode lead 112 is located. In this case, as described in the above embodiment, the second hole H2 is located close to the rear side of the battery module 10, the venting gas may be discharged more quickly and smoothly through the second hole H2. In addition, in this case, the heat such as the venting gas or flame may be suppressed or blocked from moving toward the front side of the battery module 10 where the module terminal 300 is provided.

In the above-implemented configuration, the insulating cover 500, i.e., the second insulating cover 500B, may be configured to cover the second hole H2. According to the above-implemented configuration of the present disclosure, moisture or foreign substances may be prevented from flowing into the battery module 10 through the second hole H2.

In addition, at least a part of the insulating cover 500 may be configured to be opened by venting gas when a thermal event such as venting gas occurs inside the battery module 10. For example, as disclosed in the embodiment illustrated in FIG. 13, the second insulating cover 500B may be configured as plastic and may be partially melted and opened by the heat of the venting gas or flame.

According to the above-implemented configuration of the present disclosure, the second insulating cover 500B may maintain insulation between the module frame 200 and the electrode lead 112 in a normal state of the battery module 10, and when a thermal event occurs, a part of the second insulating cover 500B may be opened so that the venting gas or flame may be quickly discharged to the outside.

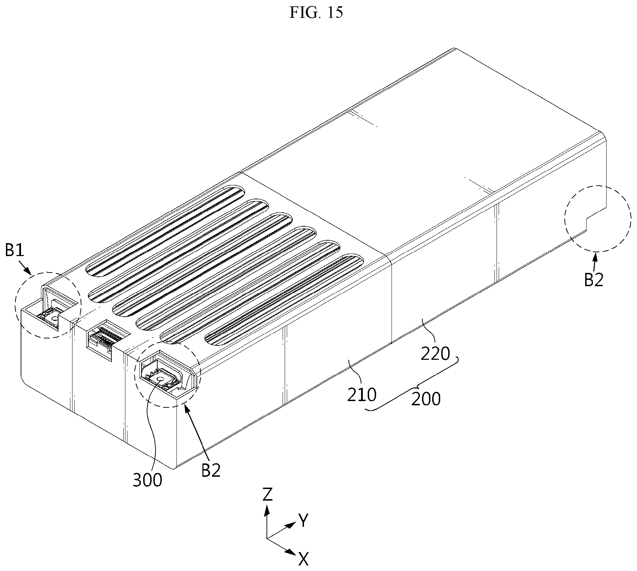

FIG. 15 is a perspective view of a battery module according to another embodiment of the present disclosure.

According to another embodiment of the present disclosure, the first frame 210 and the second frame 220 may be configured to be coupled in a vertically and horizontally symmetrical form. That is, when the first frame 210 and the second frame 220 are coupled, the first frame 210 and the second frame 220 may be configured to be vertically and horizontally symmetrical with respect to on a point located at the exact center of the side where the first frame 210 and the second frame 220 are coupled.

As another example, the second frame 220 may be configured in a form obtained by rotating the first frame 210 by 180 degrees in the horizontal direction and also rotating the same by 180 degrees in the vertical direction. Alternatively, the second frame 220 may be configured in a form obtained by flipping the first frame 210 in the front-back direction and the up-down direction.

More specifically, referring to FIG. 15, when the first frame 210 and the second frame 220 are coupled, the portion B1 located at the upper left corner of the first frame 210 may be located at the lower left corner of the second frame 220, and the portion B2 located at the upper right corner of the first frame 210 may be located at the lower right corner of the second frame 220.

Accordingly, the first hole H1 may be located at the upper front end of the first frame 210, and the second hole H2 may be located at the lower rear end of the second frame 220. According to the above-implemented configuration of the present disclosure, since the second hole H2 is located at the bottom, when the battery module 10 is mounted on another structure such as a battery pack 1, moisture or foreign substances may be prevented from flowing into the battery module 10.

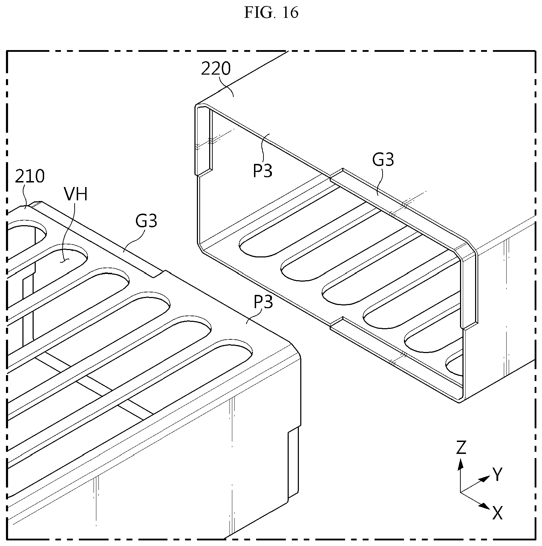

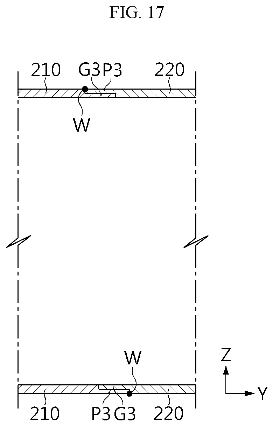

FIG. 16 is a drawing illustrating a separated module frame of a battery module according to another embodiment of the present disclosure, and FIG. 17 is a cross-sectional view illustrating a coupling portion of a module frame in a battery module according to another embodiment of the present disclosure.

In particular, as disclosed in the above embodiment, in the case where the first frame 210 and the second frame 220 are coupled in a horizontally and vertically symmetrical form, the structure in which the first frame 210 and the second frame 220 are inserted and coupled may be implemented more simply.

For example, as disclosed in the embodiment shown in FIG. 16 and FIG. 17, a third protrusion P3 may be provided at the upper right and the lower left end of the first frame 210 to protrude backward (in the +Y-axis direction). In addition, a third recess G3 may be provided at the upper left end and the lower right end of the first frame 210 to be recessed inward. The third recess G3 may be provided between the third protrusions P3. The third protrusion P3 may be configured to correspond to the length and width of the third recess G3.

Accordingly, the second frame 220, obtained by rotating the first frame 210 by 180 degrees in the horizontal direction and by 180 degrees in the vertical direction, may have a third protrusion P3 at the lower right end and upper left end, and a third recess G3 at the upper right end and lower left end.

In this case, the rear end of the first frame 210 and the front end of the second frame 220 may be insert and coupled while fitting into each other.

In this case, the weld W may be formed at a portion where the first frame 210 and the second frame 220 support each other in the front-back direction. For example, as disclosed in the embodiment shown in FIG. 17, the weld W may be formed at a point where the outermost part of the third protrusion P3 of the second frame 220 is in contact with the third recess G3 of the first frame 210 at the top of the module frame 200.

According to the embodiment of the present disclosure, when the first frame 210 and the second frame 220 are coupled to each other with only a simple shape of the first frame 210, the configuration in which the third protrusion P3 is inserted into another component may be provided at the upper and lower portions. Accordingly, the insertion fastening between the first frame 210 and the second frame 220 may be implemented more simply. Therefore, the mechanical bonding strength or assembling property between the first frame 210 and the second frame 220 may be improved.

In addition, according to the above-implemented configuration of the present disclosure, the contact state between the first frame 210 and the second frame 220 may be stably maintained during the welding process. Therefore, the welding performance may be improved.

Furthermore, according to the above-implemented configuration of the present disclosure, the battery cells 110 stored inside the module frame 200 may be prevented from being damaged during the welding process.

The positions of the third protrusion P3 and the third recess G3 formed in the first frame 210 illustrated in FIG. 16 are exemplary, and they may be provided in various positions.

In addition, in the above-described embodiment, the third protrusion P3, the third recess G3, and the weld W may be configured in various forms, such as not only the straight line illustrated in FIG. 16 and FIG. 17, but also a line that is at least partially bent.

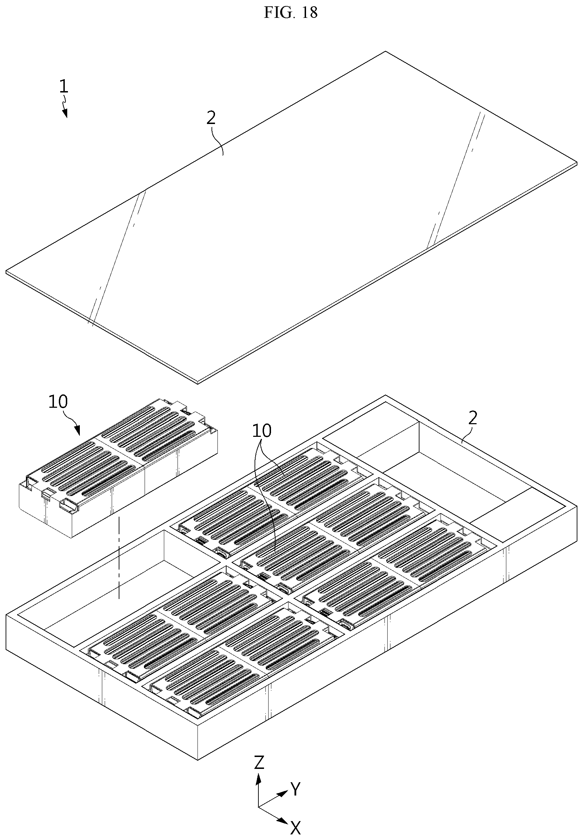

FIG. 18 is a schematically perspective view of a battery pack according to an embodiment of the present disclosure.

Referring to FIG. 18, a battery pack 1 according to an embodiment of the present disclosure may include one or more battery modules 10 according to an embodiment of the present disclosure described above. In addition, the battery pack 1 according to an embodiment of the present disclosure may further include a pack case 2. The pack case 2 may be configured to store a plurality of battery modules 10. The pack case 2 may be formed in a rectangular box shape.

In addition, although not shown in the drawing, the pack case 2 may be configured to store components such as a BMS (Battery Management System), a current sensor, and a fuse for integrated control of charging and discharging of one or more battery cells 110 therein.

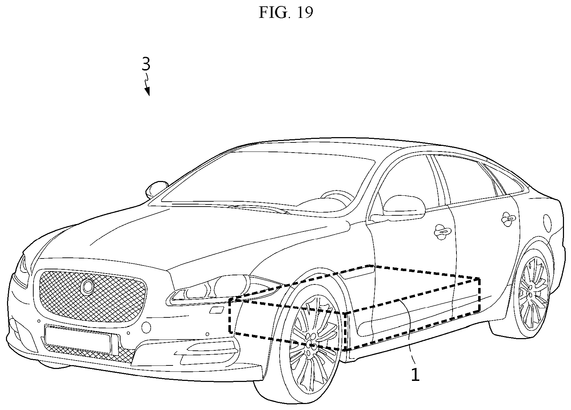

FIG. 19 is a schematically perspective view of a vehicle according to an embodiment of the present disclosure.

Referring to FIG. 19, a vehicle 3 according to an embodiment of the present disclosure may include one or more battery packs 1 according to an embodiment of the present disclosure. The vehicle 3 according to the present disclosure may be, for example, an electric vehicle, a hybrid vehicle, or a plug-in hybrid vehicle. The vehicle 3 may include a four-wheel vehicle and a two-wheel vehicle. The vehicle 3 may be operated by power supplied from a battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a cell assembly comprising a plurality of battery cells; and
a module frame comprising a first frame and a second frame configured to be coupled to each other and store the cell assembly,
wherein the first frame and the second frame are configured to be rotationally symmetrical to each other.

2. The battery module according to claim 1,
wherein the first frame and the second frame are configured to be coupled to each other in a point-symmetrical form.

3. The battery module according to claim 1,
wherein the plurality of battery cells are configured to be stacked in a first direction, and
wherein the first frame and the second frame are configured to be coupled to each other along a second direction horizontally orthogonal to the first direction.

4. The battery module according to claim 1,
wherein the first frame and the second frame are configured in a cuboid shape with one side open.

5. The battery module according to claim 1,
wherein the first frame and the second frame are configured such that their open-sided ends come into contact with each other and are coupled to each other.

6. The battery module according to claim 1,
wherein a weld is formed at open-sided ends where the first frame and the second frame are in contact with each other.

7. The battery module according to claim 6,
wherein the first frame and the second frame are configured to have a first hole and a second hole formed at a corner of an end thereof, respectively.

8. The battery module according to claim 7,
wherein a plurality of first holes and a plurality of second holes are provided respectively.

9. The battery module according to claim 7, further comprising
a module frame configured to pass through the first hole and be electrically connected to an electrode lead of the battery cell.

10. The battery module according to claim 7,
wherein the second hole is configured to allow venting gas discharged from the battery cell to flow out.

11. The battery module according to claim 10, further comprising
an insulating cover provided between the module frame and the cell assembly and configured to electrically insulate the module frame from an electrode lead of the battery cell.

12. The battery module according to claim 11,
wherein the insulating cover is configured to cover the second hole and to be opened at least partially by the venting gas.

13. The battery module according to claim 1,
wherein the first frame and the second frame are configured to be coupled in a vertically and horizontally symmetrical form.

14. A battery pack comprising a battery module according to any one of claims 1 to 13.

15. A vehicle comprising a battery module according to any one of claims 1 to 13.
